# EUROPÄISCHE PATENTSCHRIFT

(11) **EP 2 768 907 B1**
(45) Veröffentlichungstag und Bekanntmachung des Hinweises auf die Patenterteilung: **17.05.2017**
(21) Anmeldenummer: 12774935.6
(22) Anmeldetag: 18.10.2012
(51) Int. Cl.: C09B 31/18

(54) **TRISAZO-SÄUREFARBSTOFFE**
TRISAZO ACID DYES
COLORANTS ACIDES DU TYPE TRISAZO

(30) Priorität: 22.10.2011 DE 102011116716
(43) Veröffentlichungstag der Anmeldung: 27.08.2014
(73) Patentinhaber: Archroma IP GmbH, 4153 Reinach (CH)
(72) Erfinder: NUSSER, Rainer, 79395 Neuenburg (DE)
(74) Vertreter: Ricker, Mathias
(86) Internationale Anmeldenummer: PCT/EP2012/004372
(87) Internationale Veröffentlichungsnummer: WO 2013/056838

(56) Entgegenhaltungen:
- EP-A1- 0 490 195
- EP-A1- 1 832 628
- EP-A2- 0 098 522
- EP-A2- 0 524 372
- WO-A1-2011/024890

## Beschreibung

Die Erfindung betrifft neue Säurefarbstoffe, ein Verfahren zu deren Herstellung und deren Verwendung zum Färben von organischen Substraten.

Gegenstand der Erfindung sind Verbindungen der allgemeinen Formel (I) 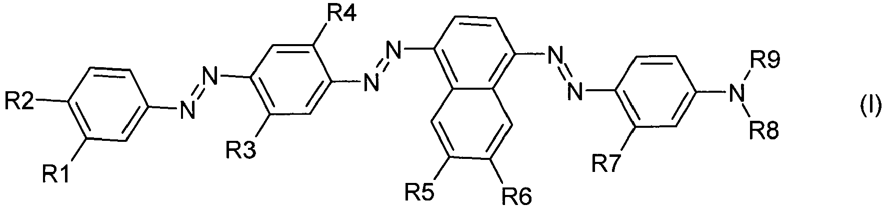 und deren Mischungen wobei
- R¹: Wasserstoff, unsubstituiertes, unverzweigtes C₁-C₆-Alkyl oder unsubstituiertes, verzweigtes C₃-C₆-Alkyl, oder substituiertes, unverzweigtes C₁-C₆-Alkyl oder substituiertes, verzweigtes C₃-C₆-Alkyl, oder SO₂Y,
- R²: Wasserstoff, unsubstituiertes, unverzweigtes C₁-C₆-Alkyl oder unsubstituiertes, verzweigtes C₃-C₆-Alkyl, oder substituiertes, unverzweigtes C₁-C₆-Alkyl oder substituiertes, verzweigtes C₃-C₆-Alkyl, Sulfo, SO₂Y oder -NHCH₂CH₂OH,
- Y: eine Hydroxy- oder Hydroxyethylgruppe,

- R³ und R⁴: unabhängig voneinander Wasserstoff, unsubstituiertes, unverzweigtes C₁-C₆-Alkyl oder unsubstituiertes, verzweigtes C₃-C₆-Alkyl, oder substituiertes, unverzweigtes C₁-C₆-Alkyl oder substituiertes, verzweigtes C₃-C₆-Alkyl, unsubstituiertes, unverzweigtes C₁-C₆-Alkoxy oder unsubstituiertes, verzweigtes C₃-C₆-Alkoxy, oder substituiertes, unverzweigtes C₁-C₆-Alkoxy oder substituiertes, verzweigtes C₃-C₆-Alkoxy,
- R⁵: Wasserstoff oder Sulfo,
- R⁶: Wasserstoff oder Sulfo,
- R⁷: Wasserstoff, unsubstituiertes, unverzweigtes C₁-C₆-Alkyl oder unsubstituiertes, verzweigtes C₃-C₆-Alkyl, oder substituiertes, unverzweigtes C₁-C₆-Alkyl oder substituiertes, verzweigtes C₃-C₆-Alkyl,
- R⁸ und R⁹: unabhängig voneinander unsubstituiertes, unverzweigtes C₁-C₆-Alkyl oder unsubstituiertes, verzweigtes C₃-C₆-Alkyl, oder substituiertes, unverzweigtes C₁-C₆-Alkyl oder substituiertes, verzweigtes C₃-C₆-Alkyl, oder Aryl, oder -(CH₂)ₙ-Aryl mit n = 1, 2, 3 oder 4, wobei die Arylreste substituiert sei können;
bedeuten,
wobei die Verbindung der Formel (I) mindestens eine anionische Gruppe enthält.

In den erfindungsgemäßen Farbstoffen der Formel (I) bedeutet
R¹ bevorzugt Wasserstoff oder SO₂Y.

In den erfindungsgemäßen Farbstoffen der Formel (I) bedeutet
R² bevorzugt Wasserstoff, Sulfo oder -NHCH₂CH₂OH.

In den erfindungsgemäßen Farbstoffen der Formel (I) bedeutet
R³ bevorzugt Wasserstoff, C₁-C₄-alkyl, insbesondere Methyl, oder C₁-C₄-Alkoxy, insbesondere Methoxy.

In den erfindungsgemäßen Farbstoffen der Formel (I) bedeutet
R⁴ bevorzugt Wasserstoff, C₁-C₄-alkyl, insbesondere Methyl, oder C₁-C₄-Alkoxy, insbesondere Methoxy.

In den erfindungsgemäßen Farbstoffen der Formel (I) bedeutet
R⁷ bevorzugt Wasserstoff oder C₁-C₄-alkyl, insbesondere Methyl.

In den erfindungsgemäßen Farbstoffen der Formel (I) bedeutet
R⁸ bevorzugt substituiertes oder unsubstituiertes -(CH₂)ₙ-Phenyl oder substituiertes oder unsubstituiertes -(CH₂)ₙ-Naphthyl mit n = 1, 2, 3 oder 4, insbesondere eine -(CH₂)₁₋₂ -Phenylgruppe oder eine -(CH₂)₁₋₂ -Phenylgruppe, bei der der Phenylrest mit einer Sulfogruppe oder einer Nitrogruppe substituiert ist. Ganz besonders bevorzugt bedeutet R⁸ Benzyl oder -CH₂-phenylen-sulfo.

In den erfindungsgemäßen Farbstoffen der Formel (I) bedeutet
R⁹ bevorzugt C₁-C₄-Alkyl, insbesondere Methyl oder Ethyl.

Die Verbindungen der Formel (I) tragen mindestens einen anionischen Substituenten, bevorzugt sind es 1 oder 2 oder 3 anionische Substituenten, wobei 2 anionische Substituenten besonders bevorzugt sind.
Bevorzugte anionische Substituenten sind Sulfogruppen.

Bevorzugte Verbindungen der Formel (I) haben 1, 2 oder 3, ganz besonders bevorzugt 2 Sulfogruppen.

Aryl bedeutet bevorzugt Phenyl oder Naphthyl.

Die Substituenten der verzweigten C₃-C₆-Alkylgruppen oder unverzweigten C₁-C₆-Alkylgruppen und der unverzweigten C₁-C₆-Alkoxygruppen oder verzweigten C₃-C₆-Alkoxygruppen sind vorzugsweise Hydroxygruppen oder Cyangruppen.

In den bevorzugten Verbindungen der Formel (I) sind die bevorzugten Alkylgruppen bzw. die bevorzugten Alkoxygruppen Methyl-, Ethyl-, Propyl-, Methoxy-, Ethoxygruppen. Ganz besonders bevorzugt sind Methyl-, Ethyl-, und Methoxygruppen.

In besonders bevorzugten Verbindungen der allgemeinen Formel (I) bedeuten
- R¹: Wasserstoff oder SO₂Y,
- Y: eine Hydroxy- oder Hydroxyethylgruppe,
- R²: Wasserstoff, SO₂Y oder -NHCH₂CH₂OH,
- R³ und R⁴: unabhängig voneinander Wasserstoff, Methyl oder Methoxy;
- R⁵: Wasserstoff oder Sulfo,
- R⁶: Wasserstoff oder Sulfo,
wobei R⁵ und R⁶ nicht gleichzeitig Sulfo bedeuten;
- R⁷: Wasserstoff oder Methyl;
- R⁸: C₁-C₂-Alkylen-phenyl oder C₁-C₂-Alkylen-phenylen-sulfo;
- R⁹: Methyl oder Ethyl.

Die Erfindung betrifft auch ein Verfahren zur Herstellung von Verbindungen der Formel (I),
wobei eine Verbindung der Formel (II) 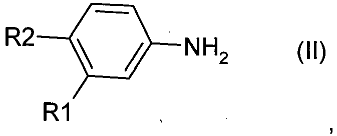 diazotiert und auf ein Equivalent einer Verbindung der Formel (III) gekuppelt 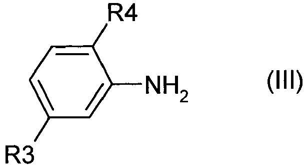 wird, das entstandene Amin der Formel (IV) 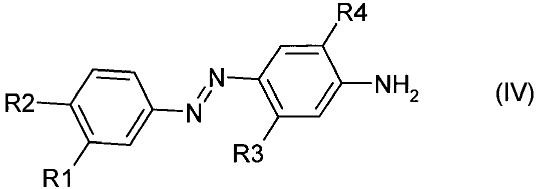 diazotiert und auf ein Equivalent einer Verbindung der Formel (V) 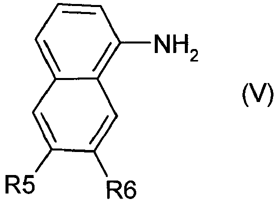 gekuppelt wird, und das entstandene Amin der Formel (VI) 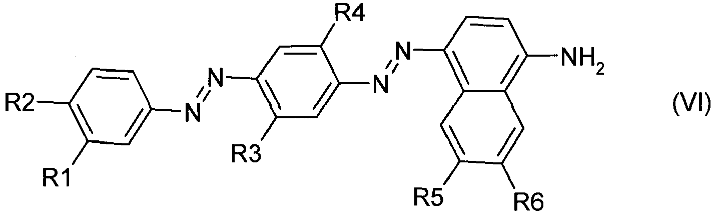 diazotiert und auf ein Equivalent einer Verbindung der Formel (VII) 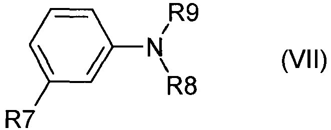 gekuppelt wird.

Die Diazotierungs- und Kupplungsbedingungen können analog üblicher Diazotierungs- und Kupplungsreaktionen gewählt werden.

Zur Diazotierung wird beispielsweise das jeweilige Amin auf 0 bis10 °C, vorzugsweise auf 0 bis 5 °C abgekühlt und durch Zugabe von Nitrosylschwefelsäure oder Natriumnitrit diazotiert. Danach lässt man das diazotierte Amin mit der entsprechenden Kupplungskomponente, vorzugsweise in wässriger Lösung, reagieren.

Die Farbstoffe der Formel (I) können aus dem Reaktionsmedium gemäss bekannten Verfahren isoliert werden, beispielsweise durch Aussalzen mit einem Alkalimetallsalz, Filtration und Trocknen, gegebenenfalls im Vakuum bei erhöhter Temperatur.

Abhängig von den Reaktions- und/oder Isolationsbedingungen können die Farbstoffe der Formel (I) als freie Säure, als Salz oder als gemischtes Salz erhalten werden, welches beispielsweise ein oder mehrere Kationen ausgewählt aus Alkalimetallionen, beispielsweise das Natriumion, oder ein Ammoniumion oder Alkylammoniumkation, beispielsweise Mono-, Di- oder Trimethyl- oder -äthylammoniumkationen, enthält. Der Farbstoff kann durch herkömmliche Techniken aus der freien Säure in ein Salz oder in ein gemischtes Salz oder umgekehrt oder von einer Salzform in eine andere umgewandelt werden. Falls erwünscht, können die Farbstoffe durch Diafiltration weiter gereinigt werden, wobei vom anionischen Rohfarbstoff unerwünschte Salze und Synthesenebenprodukte abgetrennt werden.

Die Abtrennung von unerwünschten Salzen und Synthesenebenprodukten und die teilweise Abtrennung von Wasser von der Rohfarbstofflösung kann mittels einer halbdurchlässigen Membran unter Anlegen eines Drucks durchgeführt werden, wodurch der Farbstoff ohne die unerwünschten Salze und Synthesenebenprodukte als Lösung erhalten wird und bei Bedarf als Festkörper in der üblichen Art und Weise erhalten werden kann.

Die Farbstoffe der Formel (I) und deren Salze sind besonders geeignet, um faserhaltiges Material, welches natürliches oder synthetisches Polyamid enthält oder daraus besteht, in violetten bis schwarzen Tönen zu färben oder zu bedrucken. Die Farbstoffe der Formel (I) und deren Salze sind geeignet, um Inkjetdrucktinten herzustellen und mit diesen Inkjetdrucktinten faserhaltiges Material, welches natürliches oder synthetisches Polyamid oder Cellulose (z. B. Papier) enthält oder daraus besteht, zu bedrucken.

Die Erfindung betrifft deshalb unter einem anderen Aspekt die Verwendung der Farbstoffe der Formel (I), deren Salze und Mischungen zum Färben und/oder Bedrucken von faserhaltigen Materialien, welche natürliche oder synthetische Polyamide enthalten oder daraus bestehen. Ein weiterer Aspekt ist die Herstellung von Inkjetdrucktinten und deren Verwendung zum Bedrucken von faserhaltigen Materialien, welche natürliche oder synthetische Polyamide enthalten oder daraus bestehen.

Das Färben kann gemäss bekannten Verfahren durchgeführt werden. Vorzugsweise wird im Auszugsverfahren bei einer Temperatur von 30 bis 140 °C, besonders bevorzugt 80 bis 120 °C, ganz besonders bevorzugt bei einer Temperatur von 80 bis 100 °C, und bei einem Flottenverhältnis von 1:3 bis 1:40 gefärbt.

Das zu färbende Substrat kann z. B. in Form von Garn, Gewebe, Gewirke oder Teppich vorliegen. Fully-fashioned Färbungen sind auch auf delikaten Substraten, z. B. Lammwolle, Cashmere, Alpaka und Mohair sehr gut möglich. Besonders geeignet sind die erfindungsgemässen Farbstoffe zum Färben feintitriger Fasern (Mikrofasern).

Die Farbstoffe gemäss der vorliegenden Erfindung und deren Salze zeigen eine gute Kompatibilität mit bekannten Säurefarbstoffen. Dementsprechend können die Farbstoffe der Formel (I), deren Salze oder Mischungen alleine in einem Färbe- oder Druckverfahren verwendet werden oder auch als Komponente in einer Kombinationsfärbe- oder -druckzusammensetzung zusammen mit anderen Säurefarbstoffen der gleichen Klasse, d. h. mit Säurefarbstoffen, welche vergleichbare färberische Eigenschaften besitzen, wie beispielsweise Echtheitseigenschaften und Ausziehraten vom Färbebad auf das Substrat. Die Farbstoffe der vorliegenden Erfindung können insbesondere zusammen mit gewissen anderen Farbstoffen mit geeigneten Chromophoren verwendet werden. Das Verhältnis in dem die Farbstoffe in einer Kombinationsfärbe- oder -druckzusammensetzung vorhanden sind, wird durch den Farbton, den man erhalten will, diktiert.

Die erfindungsgemäßen Farbstoffe der Formel (I) eignen sich ausgezeichnet zum Färben von natürlichen und synthetischen Polyamiden, das heisst von Wolle, Seide und sämtlichen Nylon-Typen, auf denen Färbungen mit hohem Echtheitsniveau, insbesondere guter Lichtechtheit und guten Nassechtheiten (Wäsche, alkalischer Schweiss) erhalten werden. Die Farbstoffe der Formel (I) und deren Salze zeigen eine hohe Ausziehrate. Die Aufbaufähigkeit der Farbstoffe der Formel (I) und deren Salz ist ebenfalls sehr gut. Ton-in-Ton Färbungen auf den genannten Substraten zeigen hervorragende Qualität. Alle Färbungen zeigen auch eine konstante Nuance unter Kunstlicht. Zu erwähnen sind ferner die gute Dekatur- und Verkochbeständigkeit.

Ein entscheidender Vorteil der neuen Farbstoffe ist, dass sie metallfrei sind und sehr egale Färbungen liefern.

Die Druckschriften EP0490195 A1, EP0524372 A2, EP1832628 A1, WO2011/024890 A1 sowie EP0098522 A2 offenbaren alle Trisazofarbstoffe, die eine sehr ähnliche Grundstruktur wie die anmeldungsgemässen Verbindungen aufweisen und z.T. gute Licht- bzw. Nassechtheiten ergeben. Die Verbindungen gemäss der Erfindung können als Einzelfarbstoff oder wegen ihrer guten Kombinierbarkeit auch als Kombinationselement mit anderen Farbstoffen derselben Klasse, die vergleichbare färberische Eigenschaften z. B. betreffend allgemeine Echtheiten, Ausziehwert, etc. besitzen, verwendet werden. Die erhaltenen Kombinationsfärbungen zeigen ebenso gute Echtheiten wie die Färbungen mit dem Einzelfarbstoff.

Die erfindungsgemäßen Farbstoffe der Formel (I) können auch als Blaukomponenten im Trichromiefärbeverfahren oder Trichromiedruckverfahren verwendet werden. Zum Trichromiefärben- oder bedrucken kann auf alle üblichen und bekannten Färbe- und Druckverfahren zurückgegriffen werden, wie z. B. dem Kontinueverfahren, Ausziehverfahren, Schaumfärbeverfahren und Ink-Jetverfahren.

Die Zusammensetzung der einzelnen Farbstoffkomponenten in der Trichromiefarbstoffmischung, die im erfindungsgemäßen Verfahren verwendet wird, hängt vom gewünschten Farbton ab. Z. B. für einen Braunton werden bevorzugt 20 bis 40 Gew.-% einer Gelbkomponente, 40 bis 60 Gew.-% einer Orange- bzw. Rotkomponente und 10 bis 20 Gew.-% der erfindungsgemäßen Blaukomponente verwendet.

Die Blaukomponente kann, wie oben beschrieben aus einer einzelnen Komponente bestehen oder aus einem Gemisch von unterschiedlichen blauen Einzelkomponenten, die der Formel (I) entsprechen. Bevorzugt sind Zweier- und Dreierkombinationen.

In den folgenden Beispielen bedeuten die Teile Gewichtsteile, die Prozente Gewichtsprozente; die Temperaturen sind in Celsiusgraden angegeben.

### Beispiel 1

34,6 Teile 1-Aminobenzol-3-sulfonsäure wurden in eine Mischung aus 100 Teilen Eis und 25 Volumenteilen ca. 30 %iger wässriger Salzsäure eingetragen und ca. 30 Minuten verrührt. Bei 0 bis 5 °C wurden nun 35 Volumenteile einer 40 %igen Natriumnitritlösung binnen 30 Minuten zugetropft. Die Temperatur wurde dabei durch Zugabe von Eis bei 0 bis 5 °C gehalten. Nach Beendigung der Diazotierung wurde überschüssiges Natriumnitrit mit Amidosulfonsäure zerstört.

24,6 Teile p-Xylidin wurden in 300 Teilen Wasser suspendiert. Mit Natriumcarbonat wurde die Suspension auf einen pH-Wert von 9 bis 9,5 gestellt. Innerhalb von 30 Minuten wurde nun die Diazosuspension unter starkem Rühren dazugegeben. Der pH wurde dabei durch Zudosieren von Soda-Lösung bei ca. 9 gehalten.

Nach beendeter Kupplungsreaktion wurden 50 Volumenteile ca. 30 %iger wässriger Salzsäure dazugegeben und ca. 30 Minuten verrührt. Die erhaltene Verbindung der Formel 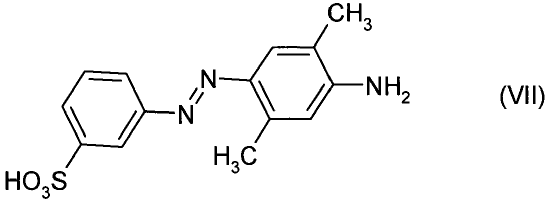 wurde mit Natriumchlorid ausgesalzen, abfiltriert und bei 50 °C im Vakuum getrocknet.

Eine Suspension von 44,7 Teilen 1-Aminonaphthalin-6-sulfonsäure in 250 Teilen Wasser wurde mit einer Diazoniumsalz-Lösung versetzt, welche auf übliche Art und Weise aus 44,7 Teilen der Aminoazoverbindung (VII) und 56,5 Volumenteilen einer 40 %igen Natriumnitritlösung bei 0 bis 5 °C hergestellt wurde. Nach beendeter Kupplung wurde der erhaltene Aminofarbstoff der Formel 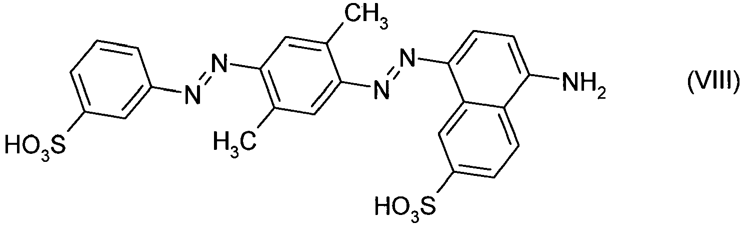 in Suspension belassen und wie vorstehend beschrieben erneut diazotiert. Die so erhaltene Diazioniumsalzlösung wurde unter Rühren innerhalb 30 Minuten zu einer Lösung aus 49,6 Teilen 3-N-Ethyl-N-benzylamino-1-methylbenzol in 150 Volumenteilen Wasser gegeben. Der pH-Wert wurde dabei durch Zudosieren von Sodalösung zwischen 4 und 4,5 gehalten. Nach beendeter Kupplungsreaktion wird der pH-Wert auf ca. 7,5 gestellt und der erhaltene Farbstoff der Formel 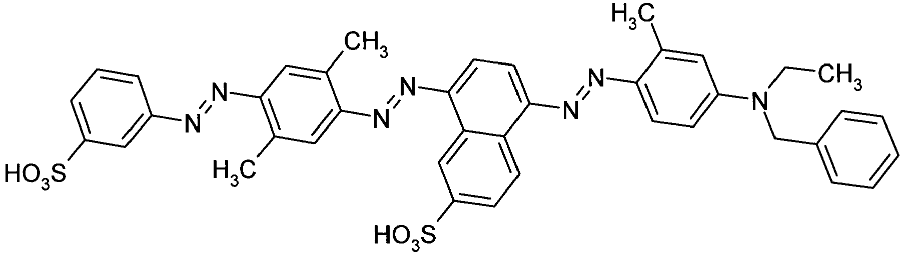 mit Natriumchlorid ausgesalzen, abfiltriert und bei 50 °C im Vakuum getrocknet. Er ergibt auf Wolle und insbesondere auf Polyamidfasern blaue Färbungen mit guten Licht- und Nassechtheitseigenschaften (lambda(max) (λₘₐₓ) = 593 nm).

### Beispiele 2 bis 60

Die folgende Tabelle beinhaltet Farbstoffe, die analog der in Beispiel 1 beschriebenen Methode unter Verwendung der entsprechenden Ausgangsmaterialien hergestellt wurden. Diese Farbstoffe liefern auf Polyamidfasern und Wolle blaue Färbungen mit sehr guten Licht- und Nassechtheiten.

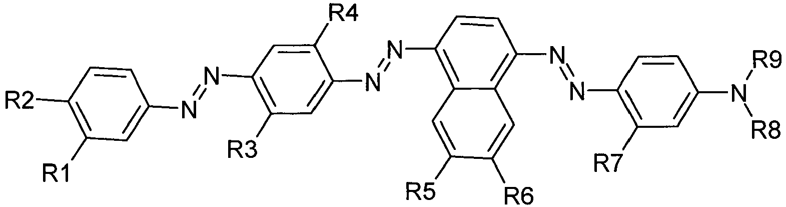

| Beispiel | R₁ | R₂ | R₃ | R₄ | R₅ | R₆ | R₇ | R₈ | R₉ | λₘₐₓ |
|---|---|---|---|---|---|---|---|---|---|---|
| 2 | -SO₃H | H | Me | Me | H | -SO₃H | Me | 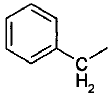 | Et | 592 |
| 3 | H | -SO₃H | Me | Me | H | -SO₃H | Me | 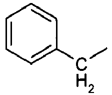 | Et | 585 |
| 4 | H | -SO₃H | Me | Me | -SO₃H | H | Me | 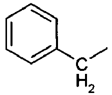 | Et | 596 |
| 5 | H | -SO₂CH₂CH₂OH | Me | Me | H | -SO₃H | Me | 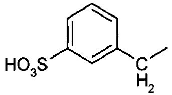 | Et | 594 |
| 6 | H | -SO₂CH₂CH₂OH | Me | Me | -SO₃H | H | Me | 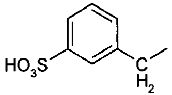 | Et | 594 |
| 7 | -SO₂CH₂CH₂OH | H | Me | Me | H | -SO₃H | Me | 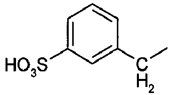 | Et | 596 |
| 8 | -SO₂CH₂CH₂OH | H | Me | Me | -SO₃H | H | Me | 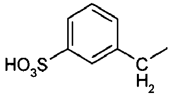 | Et | 595 |
| 9 | -SO₃H | H | Me | Me | H | H | Me | 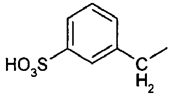 | Et | 594 |
| 10 | -SO₃H | H | Me | Me | H | H | Me | 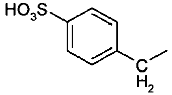 | Et | 590 |
| 11 | H | -SO₃H | Me | Me | H | H | Me | 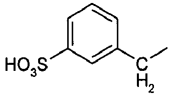 | Et | 588 |
| 12 | H | -SO₃H | Me | Me | H | H | Me | 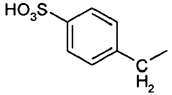 | Et | 597 |
| 13 | -SO₃H | H | Me | Me | H | H | H | 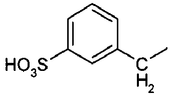 | Et | 593 |
| 14 | -SO₃H | H | Me | Me | H | -SO₃H | Me | 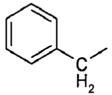 | Me | 592 |
| 15 | -SO₃H | H | Me | Me | -SO₃H | H | Me | 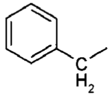 | Me | 597 |
| 16 | H | -SO₃H | H | H | H | -SO₃H | Me | 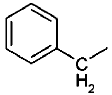 | Et | 596 |
| 17 | H | -SO₃H | H | H | -SO₃H | H | Me | 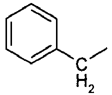 | Et | 589 |
| 18 | -SO₂CH₂CH₂OH | -NH₂CH₂CH₂OH | Me | Me | -SO₃H | H | Me | 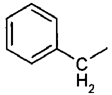 | Et | 592 |
| 19 | -SO₂CH₂CH₂OH | -NH₂CH₂CH₂OH | Me | Me | -SO₃H | H | H | 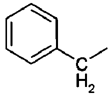 | Et | 590 |
| 20 | -SO₂CH₂CH₂OH | -NH₂CH₂CH₂OH | Me | Me | H | -SO₃H | Me | 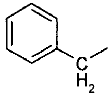 | Et | 595 |
| 21 | -SO₂CH₂CH₂OH | -NH₂CH₂CH₂OH | Me | Me | H | -SO₃H | H | 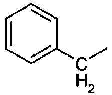 | Et | 596 |
| 22 | -SO₂CH₂CH₂OH | -NH₂CH₂CH₂OH | Me | Me | -SO₃H | H | Me | 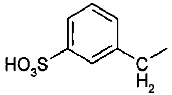 | Et | 587 |
| 23 | -SO₂CH₂CH₂OH | -NH₂CH₂CH₂OH | Me | Me | -SO₃H | H | H | 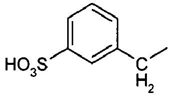 | Et | 589 |
| 24 | -SO₂CH₂CH₂OH | -NH₂CH₂CH₂OH | Me | Me | H | -SO₃H | Me | 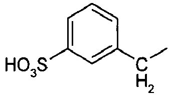 | Et | 588 |
| 25 | -SO₂CH₂CH₂OH | -NH₂CH₂CH₂OH | Me | Me | H | -SO₃H | H | 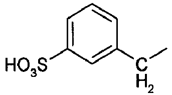 | Et | 588 |
| 26 | -SO₂CH₂CH₂OH | -NH₂CH₂CH₂OH | Me | Me | -SO₃H | H | Me | 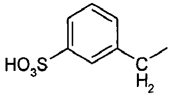 | Me | 591 |
| 27 | -SO₂CH₂CH₂OH | -NH₂CH₂CH₂OH | Me | Me | -SO₃H | H | H | 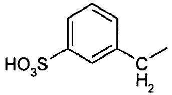 | Me | 592 |
| 28 | -SO₂CH₂CH₂OH | -NH₂CH₂CH₂OH | Me | Me | H | -SO₃H | Me | 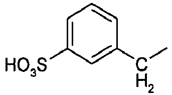 | Me | 592 |
| 29 | -SO₂CH₂CH₂OH | -NH₂CH₂CH₂OH | Me | -OMe | -SO₃H | H | Me | 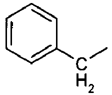 | Et | 599 |
| 30 | -SO₂CH₂CH₂OH | -NH₂CH₂CH₂OH | Me | -OMe | -SO₃H | H | H | 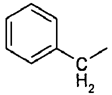 | Et | 598 |
| 31 | -SO₂CH₂CH₂OH | -NH₂CH₂CH₂OH | Me | -OMe | H | -SO₃H | Me | 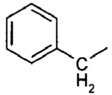 | Et | 601 |
| 32 | -SO₂CH₂CH₂OH | -NH₂CH₂CH₂OH | Me | -OMe | H | -SO₃H | H | 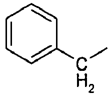 | Et | 602 |
| 33 | -SO₂CH₂CH₂OH | -NH₂CH₂CH₂OH | Me | -OMe | -SO₃H | H | Me | 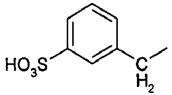 | Et | 594 |
| 34 | -SO₂CH₂CH₂OH | -NH₂CH₂CH₂OH | Me | -OMe | -SO₃H | H | H | 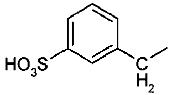 | Et | 592 |
| 35 | -SO₂CH₂CH₂OH | -NH₂CH₂CH₂OH | Me | -OMe | H | -SO₃H | Me | 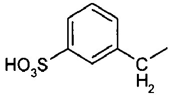 | Et | 589 |
| 36 | -SO₂CH₂CH₂OH | -NH₂CH₂CH₂OH | Me | -OMe | H | -SO₃H | H | 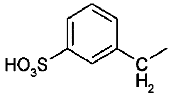 | Et | 592 |
| 37 | -SO₂CH₂CH₂OH | -NH₂CH₂CH₂OH | -OMe | -OMe | -SO₃H | H | Me | 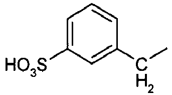 | Et | 591 |
| 38 | -SO₂CH₂CH₂OH | -NH₂CH₂CH₂OH | -OMe | -OMe | -SO₃H | H | H | 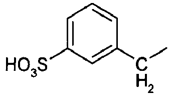 | Et | 588 |
| 39 | -SO₂CH₂CH₂OH | -NH₂CH₂CH₂OH | -OMe | -OMe | H | -SO₃H | Me | 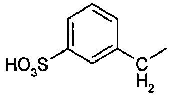 | Et | 587 |
| 40 | -SO₂CH₂CH₂OH | -NH₂CH₂CH₂OH | -OMe | -OMe | H | -SO₃H | H | 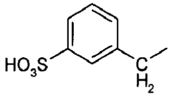 | Et | 588 |
| 41 | -SO₂CH₂CH₂OH | -NH₂CH₂CH₂OH | -OMe | -OMe | -SO₃H | H | Me | 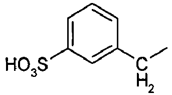 | Me | 596 |
| 42 | -SO₂CH₂CH₂OH | -NH₂CH₂CH₂OH | -OMe | -OMe | H | -SO₃H | Me | 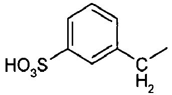 | Me | 594 |
| 43 | -SO₃H | H | Me | -OMe | H | -SO₃H | Me | 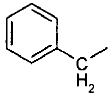 | Et | 588 |
| 44 | -SO₃H | H | Me | -OMe | -SO₃H | H | Me | 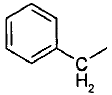 | Et | 590 |
| 45 | H | -SO₃H | Me | -OMe | H | -SO₃H | Me | 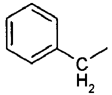 | Et | 589 |
| 46 | H | -SO₃H | Me | -OMe | -SO₃H | H | Me | 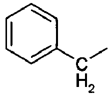 | Et | 588 |
| 47 | -SO₃H | H | -OMe | -OMe | H | -SO₃H | Me | 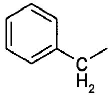 | Et | 593 |
| 48 | -SO₃H | H | -OMe | -OMe | -SO₃H | H | Me | 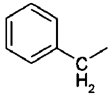 | Et | 591 |
| 49 | H | -SO₃H | -OMe | -OMe | H | -SO₃H | Me | 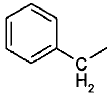 | Et | 592 |
| 50 | H | -SO₃H | -OMe | -OMe | -SO₃H | H | Me | 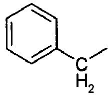 | Et | 596 |
| 51 | H | -SO₃H | Me | -OMe | H | H | Me | 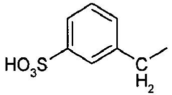 | Et | 589 |
| 52 | H | -SO₃H | -OMe | -OMe | H | H | Me | 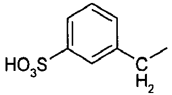 | Et | 587 |
| 53 | -SO₃H | H | Me | Me | H | -SO₃H | Me | 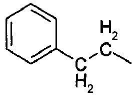 | Et | 586 |
| 54 | H | -SO₃H | Me | Me | H | -SO₃H | Me | 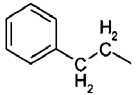 | Et | 589 |
| 55 | H | -SO₃H | Me | Me | -SO₃H | H | Me | 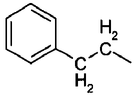 | Et | 592 |
| 56 | -SO₃H | H | Me | Me | H | -SO₃H | Me | 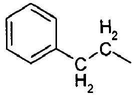 | Et | 595 |
| 57 | -SO₃H | H | Me | Me | H | -SO₃H | H | 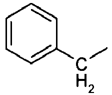 | Et | 594 |
| 58 | H | -SO₃H | Me | Me | H | -SO₃H | H | 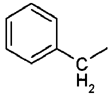 | Et | 590 |
| 59 | H | -SO₃H | Me | Me | -SO₃H | H | H | 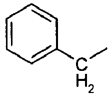 | Et | 592 |
| 60 | -SO₃H | H | Me | Me | -SO₃H | H | H | 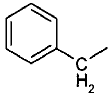 | Et | 593 |

### Anwendungsbeispiel A

Einem Färbebad von 40 °C, bestehend aus 2000 Teilen Wasser, 1 Teil eines schwach kationaktiven, farbstoffaffinen Egalisiermittels auf der Basis eines äthoxylierten Aminopropylfettsäureamids, 0,25 Teile des Farbstoffs aus Beispiel 1, das mit 1 bis 2 Teilen 40 %iger wässriger Essigsäure auf pH 5 eingestellt wurde, werden 100 Teile Polyamid 6-Gewebe zugesetzt. Nach 10 Minuten bei 40 °C wird das Färbebad mit einer Temperatursteigerung von 1 °C pro Minute auf 98 °C erhitzt und dann 45 bis 60 Minuten bei Siedetemperatur belassen. Anschliessend wird innert 15 Minuten auf 70 °C abgekühlt. Die Färbung wird aus dem Bad genommen, mit warmem und dann mit kaltem Wasser gespült und getrocknet. Es resultiert eine blaue Polyamidfärbung, die gute Licht- und Nassechtheiten zeigt.

### Anwendungsbeispiel B

Einem Färbebad von 40 °C, bestehend aus 2000 Teilen Wasser, 1 Teil eines schwach kationaktiven, farbstoffaffinen Egalisiermittels auf der Basis eines äthoxylierten Aminopropylfettsäureamids, 0,3 Teile des Farbstoffs aus Beispiel 1, das mit 1 bis 2 Teilen 40 %iger Essigsäure auf pH 5,5 eingestellt wurde, werden 100 Teile Polyamid 6,6-Gewebe zugesetzt. Nach 10 Minuten bei 40 °C wird das Färbebad mit einer Temperatursteigerung von 1,5 °C pro Minute auf 120 °C erhitzt und dann 15 - 25 Minuten bei dieser Temperatur belassen. Anschliessend wird innert 25 Minuten auf 70 °C abgekühlt. Die Färbung wird aus dem Färbebad genommen, mit warmem und dann mit kaltem Wasser gespült und getrocknet. Es resultiert eine blaue Polyamidfärbung von guter Egalität, die gute Licht- und Nassechtheiten aufweist.

### Anwendungsbeispiel C

Einem Färbebad von 40 °C, bestehend aus 4000 Teilen Wasser, 1 Teil eines schwach farbstoffaffinen Egalisiermittels mit amphoteren Charakter auf der Basis eines sulfatierten, äthoxylierten Fettsäureamids, 0,4 Teile des Farbstoffs aus Beispiel 1, das mit 1 bis 2 Teilen 40 %iger Essigsäure auf pH 5 eingestellt wurde, werden 100 Teile Wollgewebe zugesetzt. Nach 10 Minuten bei 40 °C wird das Färbebad mit einer Temperatursteigerung von 1 °C pro Minute auf Siedetemperatur erhitzt und dann 40 bis 60 Minuten bei Siedetemperatur belassen. Anschliessend wird innert 20 Minuten auf 70 °C abgekühlt. Die Färbung wird aus dem Bad genommen, mit warmem und dann mit kaltem Wasser gespült und getrocknet. Es resultiert eine blaue Wollfärbung mit guten Licht- und Nassechtheiten.

### Anwendungsbeispiel D

100 Teile einer Polyamid 6-Webware werden mit einer Flotte von 50 °C bestehend aus
- 40: Teilen des Farbstoffs aus Beispiel 1,
- 100: Teilen Harnstoff,
- 20: Teilen eines nicht-ionogenen Lösungsvermittlers auf der Basis von Butyldiglykol,
- 15 - 20: Teilen Essigsäure (zur Einstellung des pH-Wertes auf 4),
- 10: Teilen eines schwach kationaktiven, farbstoffaffinen Egalisiermittels auf der Basis eines äthoxylierten Aminopropylfettsäureamids und
- 810 - 815: Teilen Wasser (Ergänzung auf 1000 Teile Foulardflotte),
foulardiert. Die so imprägnierte Ware wird aufgerollt und zur Fixierung in einer Dämpfkammer unter Sattdampf-Bedingungen bei 85 bis 98 °C während 3 bis 6 Stunden verweilen gelassen. Anschliessend wird die Färbung mit warmem und kaltem Wasser gespült und getrocknet. Man erhält eine blaue Polyamidfärbung mit guter Flächenegalität sowie guten Licht- und Nassechtheiten.

### Anwendungsbeispiel E

Ein textiles Velours-Flächengebilde aus Polyamid 6 mit einem synthetischen Grundgewebe wird mit einer Flotte, die in 1000 Teilen
- 1: Teil Farbstoff aus Beispiel 1
- 4: Teile eines handelsüblichen Verdickungsmittels auf Kernmehlätherbasis
- 2: Teile eines nicht-ionogenen Äthylenoxydadduktes eines höheren Alkylphenols
- 1: Teil Essigsäure 60 % enthält,
foulardiert. Anschliessend wird mit einer Paste, die in 1000 Teilen die folgenden Komponenten enthält, bedruckt:
- 20: Teile handelsübliches alkoxyliertes Fettalkylamin
- 20: Teile eines handelsüblichen Verdickungsmittel auf Kernmehlätherbasis.

Der Druck wird während 6 Minuten in Sattdampf bei 100 °C fixiert, gespült und getrocknet. Man erhält einen egal gefärbten blau und weiss gemusterten Bezugsstoff.

### Anwendungsbeispiel F

Einem Färbebad von 40 °C, bestehend aus 2000 Teilen Wasser, 1 Teil eines schwach kationaktiven, farbstoffaffinen Egalisiermittels auf der Basis eines äthoxylierten Aminopropylfettsäureamids, 0,2 Teile des roten Farbstoffs aus Beispiel 8 aus WO-2002/46318, 1,5 Teile eines handelsüblichen Präparates von C.I. Acid Yellow 236 (Nylosan Gelb F-L) und 0,5 Teile des blauen Farbstoffes aus Beispiel 1 das mit 1 - 2 Teilen 40 %iger Essigsäure auf pH 5 eingestellt wurde, werden 100 Teile Polyamid 6.6-Gewebe zugesetzt. Nach 10 Minuten bei 40 °C wird das Färbebad mit einer Temperatursteigerung von 1 °C pro Minute auf 98 °C erhitzt und dann 45 bis 60 Minuten bei Siedetemperatur belassen. Anschliessend wird innert 15 Minuten auf 70 °C abgekühlt. Die Färbung wird aus dem Bad genommen, mit warmem und dann mit kaltem Wasser gespült und getrocknet. Es resultiert eine egale graue Polyamidfärbung, die gute Licht- und Nassechtheiten zeigt.

Die Anwendungsbeispiele A bis F wurden mit ebenso guten Resultaten auch mit den Farbstoffen 2 bis 60 durchgeführt.

### Anwendungsbeispiel G

3 Teile des Farbstoffs aus Beispiel 3 werden in 82 Teilen entmineralisiertem Wasser und 15 Teilen Diäthylenglykol bei 60 °C gelöst. Nach dem Abkühlen auf Raumtemperatur erhält man eine blaue Drucktinte, die sich sehr gut für den Ink Jet-Druck auf Papier oder Polyamid- und Wolltextilien eignet.

Das Anwendungsbeispiel G wurde mit ebenso guten Resultaten auch mit den Farbstoffen 1, 2 und 4 bis 60 durchgeführt.

### Anwendungsbeispiel H

Ein Färbebad bestehend aus 1000 Wasser, 80 Teilen kalziniertem Glaubersalz, 1 Teil Nitrobenzol-3-sulfonsaurem Natrium und 1 Teil Farbstoff aus Beispiel 1wird innerhalb von 10 Minuten auf 80 °C erwärmt. Dann werden 100 Teile mercerisierte Baumwolle zugefügt. Es wird 5 Minuten bei 80 °C gefärbt und dann innert 15 Minuten auf 95 °C erwärmt. Nach 10 Minuten bei 95 °C werden 3 Teile Soda, nach 20 Minuten weitere 7 Teile Soda und nach 30 Minuten bei 95 °C nochmals 10 Teile Soda zugesetzt. Anschliessend wird 60 Minuten bei 95 °C weiter gefärbt. Dann wird das gefärbte Material aus dem Färbebad entfernt und 3 Minuten in fliessendem, entmineralisiertem Wasser gespült. Nun wird zweimal während 10 Minuten in je 5000 Teilen kochendem entmineralisiertem Wasser gewaschen, anschliessend wird 3 Minuten in fliessendem, entmineralisiertem Wasser von 60 °C und eine Minute mit kaltem Leitungswasser gespült. Nach dem Trocknen erhält man eine brillante blaue Baumwollfärbung mit guten Echtheiten.

### Anwendungsbeispiel J

0,2 Teile des Farbstoffs aus Beispiel 1 werden in 100 Teilen heissem Wasser gelöst und die Lösung auf Raumtemperatur abgekühlt. Diese Lösung gibt man zu 100 Teilen chemisch gebleichter Sulfitzellulose, die in 2000 Teilen Wasser in einem Holländer gemahlen wurde. Nach 15 Minuten Durchmischung wird auf übliche Art mit Harzleim und Aluminiumsulfat geleimt. Papier, das aus diesem Stoff hergestellt wird, besitzt eine blaue Nuance mit guten Nassechtheiten.

Die Anwendungsbeispiele H und J wurden mit ebenso guten Resultaten auch mit den Farbstoffen 2 bis 60 durchgeführt.

## Patentansprüche

1. Verbindung der allgemeinen Formel (I) 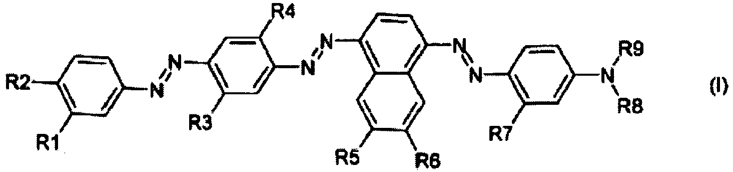 und deren Mischungen
wobei
R¹ Wasserstoff, unsubstituiertes, unverzweigtes C₁-C₆-Alkyl oder unsubstituiertes, verzweigtes C₃-C₆-Alkyl, oder substituiertes, unverzweigtes C₁-C₆-Alkyl oder substituiertes, verzweigtes C₃-C₆-Alkyl, oder SO₂Y,
R² Wasserstoff, unsubstituiertes, unverzweigtes C₁-C₆-Alkyl oder unsubstituiertes, verzweigtes C₃-C₆-Alkyl, oder substituiertes, unverzweigtes C₁-C₆-Alkyl oder substituiertes, verzweigtes C₃-C₆-Alkyl, Sulfo, SO₂Y oder -NHCH₂CH₂OH,
Y eine Hydroxy- oder Hydroxyethylgruppe,
R³ und R⁴ unabhängig voneinander Wasserstoff, unsubstituiertes, unverzweigtes C₁-C₆-Alkyl oder unsubstituiertes, verzweigtes C₃-C₆-Alkyl, oder substituiertes, unverzweigtes C₁-C₆-Alkyl oder substituiertes, verzweigtes C₃-C₆-Alkyl, unsubstituiertes, unverzweigtes C₁C₆-Alkoxy oder unsubstituiertes, verzweigtes C₃-C₆-Alkoxy, oder substituiertes, unverzweigtes C₁-C₆-Alkoxy oder substituiertes, verzweigtes C₃-C₆- Alkoxy,
R⁵ Wasserstoff oder Sulfo,
R⁶ Wasserstoff oder Sulfo,
R⁷ Wasserstoff, unsubstituiertes, unverzweigtes C₁-C₆-Alkyl oder unsubstituiertes, verzweigtes C₃-C₆-Alkyl, oder substituiertes, unverzweigtes C₁-C₆-Alkyl oder substituiertes, verzweigtes C₃-C₆-Alkyl,
R⁸ und R⁹ unabhängig voneinander unsubstituiertes, unverzweigtes C₁-C₆-Alkyl oder unsubstituiertes, verzweigtes C₃-C₆-Alkyl, oder substituiertes, unverzweigtes C₁-C₆-Alkyl oder substituiertes, verzweigtes C₃-C₆- Alkyl, oder Aryl, oder -(CH₂)ₙ-Aryl mit n = 1, 2, 3 oder 4, wobei die Arylreste substituiert sei können;
bedeuten,
wobei die Verbindung der Formel (I) mindestens eine anionische Gruppe enthält.

2. Verbindung nach Anspruch 1 , **dadurch gekennzeichnet, dass** die mindestens eine anionische Gruppe 1 , 2 oder 3, vorzugsweise 2, Sulfogruppen bedeutet.

3. Verbindung nach Anspruch 1 oder 2, **dadurch gekennzeichnet, dass** R¹ Wasserstoff oder SO₂Y bedeutet.

4. Verbindung nach einem oder mehreren der Ansprüche 1 bis 3, **dadurch gekennzeichnet, dass** R² Wasserstoff, Sulfo oder -NHCH₂CH₂OH bedeutet.

5. Verbindung nach einem oder mehreren der Ansprüche 1 bis 4, **dadurch gekennzeichnet, dass** R³ Wasserstoff oder C₁-C₄-alkyl bedeutet.

6. Verbindung nach einem oder mehreren der Ansprüche 1 bis 5, **dadurch gekennzeichnet, dass** R⁴ Wasserstoff oder C₁ -C₄-alkyl bedeutet.

7. Verbindung nach einem oder mehreren der Ansprüche 1 bis 6, **dadurch gekennzeichnet, dass** R⁷ Wasserstoff oder C₁-C₄-alkyl bedeutet.

8. Verbindung nach einem oder mehreren der Ansprüche 1 bis 7, **dadurch gekennzeichnet, dass** R⁸ substituiertes oder unsubstituiertes -(CH₂)ₙ-Phenyl oder substituiertes oder unsubstituiertes -(CH₂)ₙ-Naphthyl mit n = 1, 2, 3 oder 4 bedeutet.

9. Verbindung nach einem oder mehreren der Ansprüche 1 bis 8, **dadurch gekennzeichnet, dass** R⁹ C₁-C₄-Alkyl bedeutet.

10. Verbindung nach einem oder mehreren der Ansprüche 1 bis 9, **dadurch gekennzeichnet, dass** R⁸ eine -(CH₂)₁₋₂-Phenylgruppe oder eine -(CH₂)₁₋₂-Phenylgruppe, bei der der Phenylrest mit einer Sulfogruppe oder einer Nitrogruppe substituiert ist, bedeutet.

11. Verbindung nach einem oder mehreren der Ansprüche 1 bis 10, **dadurch gekennzeichnet, dass**
R¹ Wasserstoff oder SO₂Y,
Y eine Hydroxy- oder Hydroxyethylgruppe,
R² Wasserstoff, SO₂Y oder -NHCH₂CH₂OH,
R³ und R⁴ unabhängig voneinander Wasserstoff, Methyl oder Methoxy;
R⁵ Wasserstoff oder Sulfo,
R⁶ Wasserstoff oder Sulfo,
wobei R⁵ und R⁶ nicht gleichzeitig Sulfo bedeuten;
R⁷ Wasserstoff oder Methyl;
R⁸ C₁- C₂-Alkylen-phenyl oder C₁-C₂-Alkylen-phenylen-sulfo;
R⁹ Methyl oder Ethyl, bedeuten.

12. Verfahren zur Herstellung einer Verbindung nach einem oder mehreren der Ansprüche 1 bis 11, **dadurch gekennzeichnet, dass** man eine Verbindung der Formel (II) 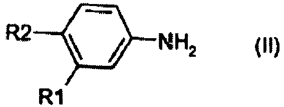 diazotiert und auf ein Equivalent einer Verbindung der Formel (III) kuppelt, 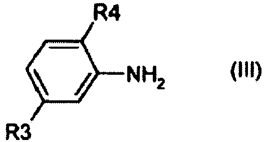 das entstandene Amin der Formel (IV) 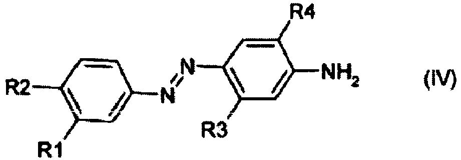 diazotiert und auf ein Equivalent einer Verbindung der Formel (V) 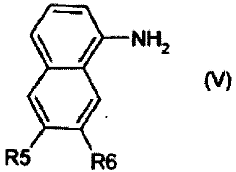 kuppelt, und das entstandene Amin der Formel (VI) 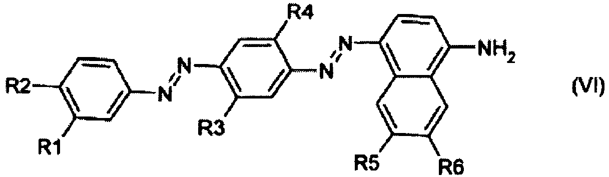 diazotiert und auf ein Equivalent einer Verbindung der Formel (VII) 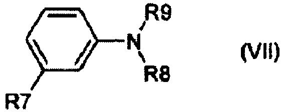 kuppelt, wobei die Reste R¹ bis R⁹ wie in einem oder mehreren der Ansprüche 1 bis 11 definiert sind.

13. Verwendung einer Verbindung gemäß einem oder mehreren der Ansprüche 1 bis 11 zum Färben oder Bedrucken von faserhaltigen Materialien, welche natürliche oder synthetische Polyamide enthalten oder daraus bestehen.

14. Verwendung nach Anspruch 13, **dadurch gekennzeichnet, dass** die Polyamide Wolle, Seide oder Nylon sind.

15. Verwendung nach Anspruch 13 oder 14 als Blaukomponente in einem Trichromiefärbeverfahren oder Trichromiedruckverfahren.

## Claims

1. Compound of generic formula (I) 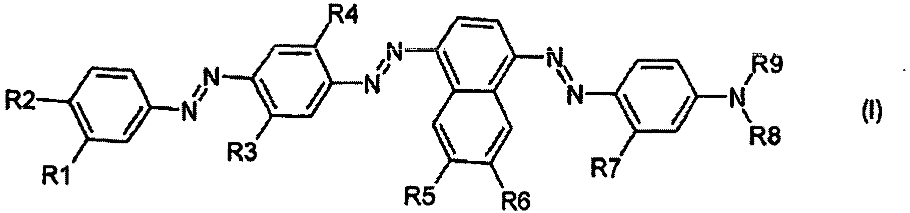 and mixtures thereof, wherein
R¹ signifies hydrogen, unsubstituted, unbranched C₁-C₆-alkyl or unsubstituted, branched C₃-C₆-alkyl, or substituted, unbranched C₁-C₆-alkyl, or substituted, branched C₃-C₆-alkyl, or SO₂Y,
R² signifies hydrogen, unsubstituted, unbranched C₁-C₆-alkyl or unsubstituted, branched C₃-C₆-alkyl, or substituted, unbranched C₁-C₆-alkyl or substituted, branched C₃-C₆-alkyl, sulfo, SO₂Y or -NHCH₂CH₂OH,
Y signifies a hydroxyl or hydroxyethyl group,
R³ and R⁴ signify independently from each other hydrogen, unsubstituted, unbranched C₁-C₆-alkyl or unsubstituted, branched C₃-C₆-alkyl, or substituted, unbranched C₁-C₆-alkyl or substituted, branched C₃-C₆-alkyl, unsubstituted, unbranched C₁-C₆-alkoxy, or unsubstituted, branched C₃-C₆-alkoxy, or substituted, unbranched C₁-C₆-alkoxy or substituted, branched C₃-C₆-alkoxy,
R⁵ signifies hydrogen or sulfo,
R⁶ signifies hydrogen or sulfo,
R⁷ signifies hydrogen, unsubstituted, unbranched C₁-C₆-alkyl or unsubstituted, branched C₃-C₆-alkyl, or substituted, unbranched C₁-C₆-alkyl, or substituted, branched C₃-C₆-alkyl,
R⁸ and R⁹ signify independently from each other unsubstituted, unbranched C₁-C₆-alkyl, or unsubstituted, branched C₃-C₆-alkyl, or substituted, unbranched C₁-C₆-alkyl, or substituted, branched C₃-C₆ alkyl, or aryl, or -(CH₂)ₙ-aryl with n= 1, 2, 3 or 4, wherein the aryl residues may be substituted,
wherein said compound of formula (I) contains at least one anionic group.

2. Compound according to claim 1, **characterized in that** the at least one anionic group signifies 1, 2, or 3, preferably 2, sulfo groups.

3. Compound according to claim 1 or 2, **characterized in that** R¹ signifies hydrogen or SO₂Y.

4. Compound according to one or more of claims 1 to 3, **characterized in that** R² signifies hydrogen, sulfo or -NHCH₂CH₂OH.

5. Compound according to one or more of claims 1 to 4, **characterized in that** R³ signifies hydrogen or C₁-C₄-alkyl.

6. Compound according to one or more of the claims 1 to 5, **characterized in that** R⁴ signifies hydrogen or C₁-C₄-alkyl.

7. Compound according to one or more of claims 1 to 6, **characterized in that** R⁷ signifies hydrogen or C₁-C₄-alkyl.

8. Compound according to one or more of claims 1 to 7, **characterized in that** R⁸ signifies substituted or unsubstituted -(CH₂)ₙ-phenyl or substituted or unsubstituted -(CH₂)ₙ-naphtyl with n= 1, 2, 3 or 4.

9. Compound according to one or more of claims 1 to 8, **characterized in that** R⁹ signifies C₁-C₄-alkyl.

10. Compound according to one or more of claims 1 to 9, **characterized in that** R⁸ signifies a -(CH₂)₁₋₂- phenyl group or a -(CH₂)₁₋₂- phenyl group wherein the phenyl residue is substituted with a sulfo group or a nitrogen group.

11. Compound according to one or more of claims 1 to 10, **characterized in that**
R¹ signifies hydrogen or SO₂Y,
Y signifies a hydroxy or hydroxyethyl group,
R² signifies hydrogen, SO₂Y or -NHCH₂CH₂OH,
R³ and R⁴ signify independently from each other hydrogen, methyl or methoxy,
R⁵ signifies hydrogen or sulfo,
R⁶ signifies hydrogen or sulfo,
wherein R⁵ and R⁶ do not signify sulfo simultaneously;
R⁷ signifies hydrogen or methyl;
R⁸ signifies C₁-C₂-alkylene-phenyl or C₁-C₂-alkylen-phenylene-sulfo;
R⁹ signifies methyl or ethyl.

12. Process for manufacturing a compound according to one or more of claims 1 to 11, **characterized in that** a compound of formula (II) 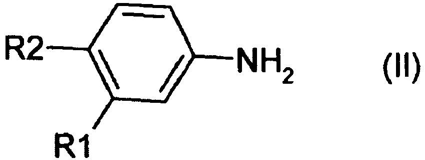 is diazotized and coupled to one equivalent of a compound of the formula (III), 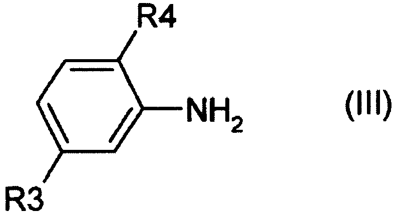 the formed amine of the formula (IV) 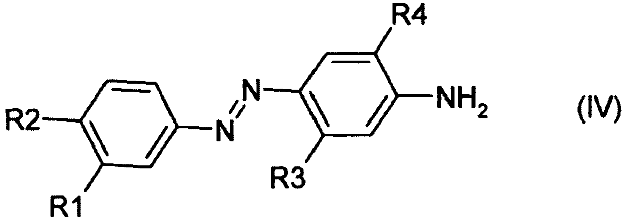 is diazotized and coupled to one equivalent of a compound of the fomula (V) 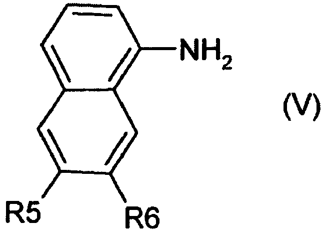 and the formed amine of the formula (VI) 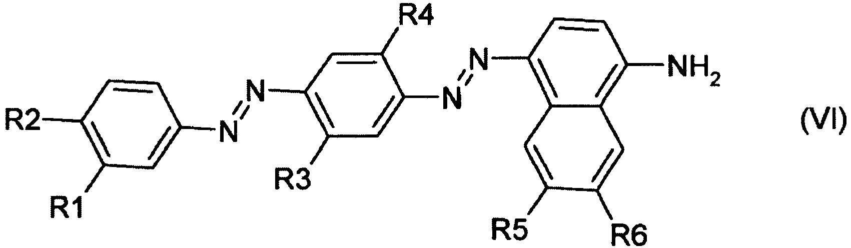 is diazotized and coupled to one equivalent of a compound of formula (VII) 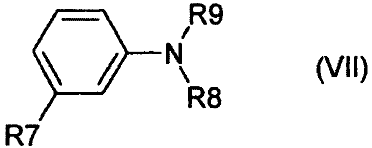 wherein R¹ to R⁹ are defined as in one or more of claims 1 to 11.

13. Use of a compound according to one or more of claims 1 to 11 for dyeing or printing of fibrous materials comprising or consisting of natural or synthetic polyamides.

14. Use according to claim 13, **characterized in that** the polyamides are wool, silk or nylon.

15. Use according to claim 13 or 14 as blue component in a trichromatic dyeing process or trichromatic printing process.

## Revendications

1. Composé de formule générale (I) 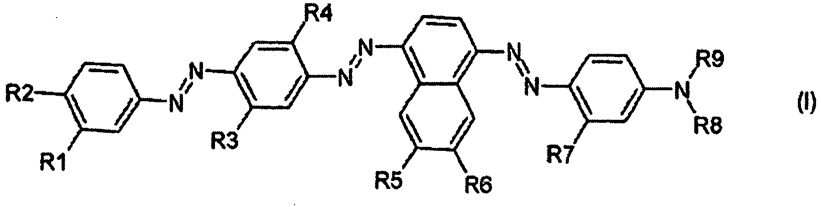 et mélange de ceux-ci, où
R¹ représente l'hydrogène, un groupe alkyle en C₁-C₆ non substitué, non ramifié ou alkyle en C₃-C₆ non substitué, ramifié, ou alkyle en C₁-C₆ substitué, non ramifié, ou alkyle en C₃-C₆ substitué, ramifié, où SO₂Y,
R² représente l'hydrogène, un groupe alkyle en C₁-C₆ non substitué, non ramifié ou alkyle en C₃-C₆ non substitué, ramifié, ou alkyle en C₁-C₆ substitué, non ramifié ou alkyle en C₃-C₆ substitué, ramifié, sulfo, SO₂Y ou -NHCH₂CH₂OH,
Y représente un groupe hydroxy ou hydroxyéthyle,
ou R³ et R⁴ représentent indépendamment l'un de l'autre l'hydrogène, un groupe alkyle en C₁-C₆ non substitué, non ramifié ou alkyle en C₃-C₆ non substitué, ramifié, ou alkyle en C₁-C₆ substitué, non ramifié ou alkyle en C₃-C₆ substitué, ramifié, alcoxy en C₁-C₆ non substitué, non ramifié ou alcoxy en C₃-C₆ non substitué, ramifié, ou alcoxy en C₁-C₆ substitué, non ramifié ou alcoxy en C₃-C₆ substitué, ramifié,
R⁵ représente l'hydrogène ou un groupe aulfo,
R⁶ représente l'hydrogène ou un groupe sulfo,
R⁷ représente l'hydrogène, un groupe alkyle en C₁-C₆ non substitué, non ramifié ou alkyle en C₃-C₆ non substitué, ramifié, ou alkyle en C₁-C₆ substitué, non ramifié, ou alkyle en C₃-C₆ substitué, ramifié,
R⁸ et R⁹ représentent indépendamment l'un de l'autre un groupe alkyle en C₁-C₆ non substitué, non ramifié, ou alkyle en C₃-C₆ non substitué, ramifié ou alkyle en C₁-C₆ substitué, non ramifié, ou alkyle en C₃-C₆ substitué, ramifié, ou aryle, ou -(CH₂)ₙ-aryle avec n = 1, 2, 3 ou 4, où les résidus aryles peuvent être substitués ;
dans lequel ledit composé de formule (I) contient au moins un groupe anionique.

2. Composé selon la revendication 1, **caractérisé en ce que** le au moins un groupe anionique représente 1, 2, ou 3, de préférence 2, groupes sulfo.

3. Composé selon la revendication 1 ou 2, **caractérisé en ce que**, R¹ représente l'hydrogène ou SO₂Y.

4. Composé selon l'une ou plusieurs quelconques des revendications 1 à 3, **caractérisé en ce que** R² représente l'hydrogène, un groupe sulfo ou -NHCH₂CH₂OH.

5. Composé selon l'une ou plusieurs quelconques des revendications 1 à 4, **caractérisé en ce que** R³ représente l'hydrogène ou un groupe alkyle en C₁-C₄.

6. Composé selon l'une ou plusieurs quelconques des revendications 1 à 5, **caractérisé en ce que** R⁴ représente l'hydrogène ou un groupe alkyle en C₁-C₄.

7. Composé selon l'une ou plusieurs quelconques des revendications 1 à 6, **caractérisé en ce que** R⁷ représente l'hydrogène ou un groupe alkyle en C₁-C₄.

8. Composé selon l'une ou plusieurs quelconques des revendications 1 à 7, **caractérisé en ce que** R⁸ représente un groupe -(CH₂)ₙ-phényle substitué ou non substitué ou -(CH₂)ₙ-naphtyle substitué ou non substitué avec n = 1, 2, 3 ou 4.

9. Composé selon l'une ou plusieurs quelconques des revendications 1 à 8, **caractérisé en ce que** R⁹ représente un groupe alkyle en C₁-C₄.

10. Composé selon l'une ou plusieurs quelconques des revendications 1 à 9, **caractérisé en ce que** R⁸ représente un groupe -(CH₂)₁₋₂-phényle ou un groupe -(CH₂)₁₋₂-phényle ou le résidu phényle est substitué avec un groupe sulfo ou un groupe nitro.

11. Composé selon l'une ou plusieurs des revendications 1 à 10, **caractérisé en ce que**
R¹ est l'hydrogène ou SO₂Y,
Y représente un groupe hydroxy ou hydroxyéthyle,
R² représente l'hydrogène, SO₂Y ou -NHCH₂CH₂OH,
R³ et R⁴ représente indépendamment l'un de l'autre l'hydrogène, un groupe méthyle ou méthoxy,
R⁵ représente l'hydrogène ou un groupe sulfo,
R⁶ représente l'hydrogène ou un groupe sulfo,
où R⁵ et R⁶ ne représentent pas simultanément un groupe sulfo ;
R⁷ représente l'hydrogène ou le groupe méthyle ;
R⁸ représente un groupe (alkylène en C₁-C₂)phényle ou (alkylène en C₁-C₂)phénylène-sulfo ;
R⁹ représente le groupe méthyle ou éthyle.

12. Procédé pour la fabrication d'un composé selon l'une ou plusieurs des revendications 1 à 11, **caractérisé en ce qu'**un composé de la formule (II) 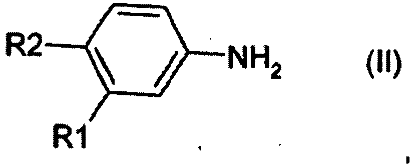 est diazoté et couplé à un équivalent d'un composé de la formule (III), 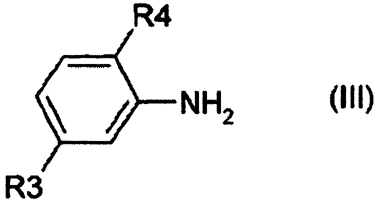 l'amine formée de la formule (IV) 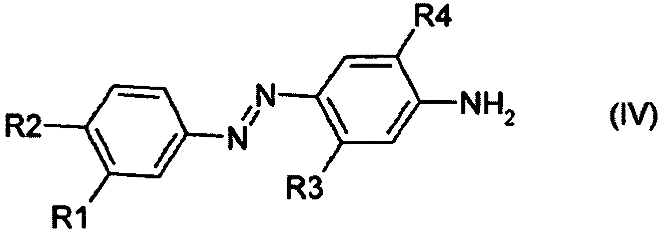 est diazoté et couplé à un équivalent d'un composé de la formule (V) 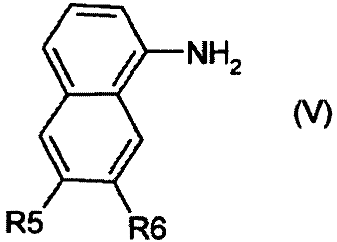 et l'amine formée de la formule (VI) 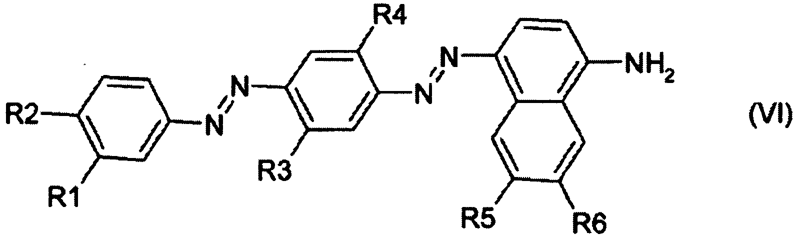 est diazotée et couplée à un équivalent d'un composé de formule (VII) 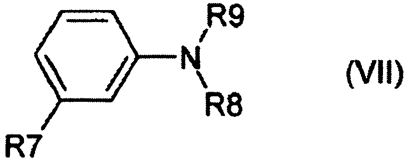 où R¹ à R⁹ sont définis comme dans l'une ou plusieurs des revendications 1 à 11.

13. Utilisation d'un composé selon l'une ou plusieurs des revendications 1 à 11 pour teindre ou imprimer des matières fibreuses comprenant ou constituées de polyamide naturel ou synthétique.

14. Utilisation selon la revendication 13, **caractérisée en ce que** les polyamides sont la laine, la soie ou le nylon.

15. Utilisation selon la revendication 13 ou 14, comme constituant bleu dans un procédé de teinture trichromatique ou un procédé d'impression trichromatique.
